# EUROPEAN PATENT APPLICATION

(11) **EP 1 566 740 A2**
(43) Date of publication of application: **24.08.2005**
(21) Application number: 05250798.5
(22) Date of filing: 11.02.2005
(51) Int. Cl.: G06F 17/22

(54) **Updating mark-up language documents**

(30) Priority: 13.02.2004 GB 0403250
(71) Applicant: Satellite Information Services Limited, London N1 6DR (GB)
(72) Inventor: Watson, John Matthew, London W2 3LB (GB); Dawson, Richard, London SE20 7BT (GB)
(74) Representative: Palmer, Jonathan R.

(57) **Abstract**

Methods and systems for providing a data feed are described. The data feed comprises update mark-up language documents containing instructions actionable by a computer system to modify a master mark-up language document. The update mark-up language document preferably comprises a command element having contents consisting only of a mark-up fragment body. An attribute of the command element identifies a command actionable by the computer system to modify the master document using the contents of the command element. The mark-up language is preferably a meta mark-up language, such as XML.

## Description

The present invention relates to a method of updating a target mark-up language document, such as an XML document. The present invention further relates to a method of providing a data feed.

Mark-up languages such as SGML (Standard Generalised Mark-up Language), HTML (Hypertext Mark-up Language) and XML (Extensible Mark-up Language) are commonly used for structuring data so that the data can be received and interpreted by many different computer systems. XML, in particular, has become a worldwide standard for structuring data, and a document containing recommendations for XML syntax has been created by the W3 Consortium and published on the Internet at http://www.w3.org/TR/2000/REC-xml-20001006.html. A further document setting out recommendations for XML Path Language (XPath) syntax has been created by the W3 Consortium and published on the Internet at http://www.w3.org/TR/1999/REC-xpath-19991116.html. Another document setting out recommendations for defining fragments of XML documents has been published on the internet at http://www.w3.org/TR/2001/CR-xml-fragment-20010212.html. These three documents provide background information relevant to the present invention and are therefore incorporated herein by reference in their entirety.

XML is regularly used by people wishing to send information across networks; news information, or sports statistics and results, for example. A reporter can create an XML document containing information about a particular sports event and transmit it to an interested person, such as a betting shop owner. In the build up to the event, and during the course of the event, the information may need updating. For example, the odds for individual horses in a race or the score in a football match may change. In the past, the reporter would modify the XML document accordingly and then re-transmit the modified document to the interested person. This is inefficient and, for a lengthy document, may take up an unacceptable amount of bandwidth.

According to a first main aspect of the present invention there is provided a method of providing a data feed to a user computer system, the user computer system having a master mark-up language document thereon containing a record of information that is subject to change, the method comprising: sending an update mark-up language document to the user computer system, the update document containing instructions actionable by the user computer system to modify the record contained in the master document, thereby bringing the information in the master document substantially up-to-date. Advantageously, by sending an update document containing instructions to update the master document, rather than resending the whole master document as updated, the present invention reduces the amount of information that it is necessary to transmit when providing a data feed. Advantageously, the method further comprises sending the master document itself to the user computer system to ensure consistency between the master document and the subsequent update documents.

Preferably, the method further comprises sending individual update documents to the user computer system as the record contained in the master document goes out of date and, at intervals, sending a master refresh mark-up language document containing the master document as updated by the or each preceding update document. In this way, the user can be confident that the information contained in the modified master document is correct and up-to-date, even if individual update documents have not been correctly transmitted. Nevertheless, the amount of data transmitted to the user computer system is greatly reduced relative to a method in which a complete copy of the master document is sent to the user every time the information changes.

Other aspects of the present invention provide a computer implemented method of receiving a data feed, an updater computer system for providing a data feed to a user computer system, and a user computer system for receiving a data feed from an updater computer system. Preferred and advantageous features of these additional aspects of the invention will be clear from the discussion of the first main aspect above. Additional preferred features are indicated below and in the accompanying claims.

Preferably, in a method aspect, the update document is sent to the user computer system using any of an Internet protocol, a hypertext transfer protocol, a wireless protocol, and a wireline protocol. Preferably, in a computer system aspect, the computer system comprises a communications server which sends the update document to a user computer system, or receives the update document at a user computer system, using any of an Internet protocol, a hypertext transfer protocol, a wireless protocol, and a wireline protocol.

Preferably, the update document comprises a mark-up language fragment body and the instructions are to add the fragment body to the master document. Preferably, the instructions also specify a location in the master document to add the fragment body.

Preferably, the information is information describing a sports event. More preferably, the information comprises statistics from the sports event.

A second main aspect of the present invention provides an update mark-up language document for use in instructing a computer system to modify a target mark-up language document stored on the computer system, comprising: a command element having contents consisting of a mark-up language fragment body, the command element identifying a command to add the fragment body to the target document. In this way a target document can be updated by sending only the new information. Advantageously, the new information to update the previously transmitted mark-up language document is itself contained in a mark-up language document so it is not necessary for a human reviewer to understand two different syntaxes. Also, the command element contains only a fragment body, typically comprising at least one element, and the whole contents of the command element are added directly to the target document. The syntax is therefore very simple and it is immediately apparent to a reviewer what new information has been transmitted. A fragment body is defined generally in the document incorporated by reference above as being a part of a mark-up language document which nevertheless contains all of the mark-up of a construct (eg, the fragment body contains both the start and end tags of any elements). Consequently, when a well-formed target document is updated by adding a fragment body, the updated document will still be well-formed.

Preferably, the name of the command element identifies the command to add the fragment body to the target document. Advantageously, this further simplifies the syntax of the update document. Also, a reviewer can immediately identify the command being used to add the new information to the target document, and quickly understand how the target document will be modified.

Preferably, the update document further comprises a root element containing the command element. Advantageously, the root element can include additional attributes to control the processing of the update document, thereby ensuring that the command element itself has a simple structure. For example, the root element may include a target identifier attribute identifying the target document, or a namespace identifier attribute identifying a namespace of the target document, or of the update document itself. This information will often be required by a processor, but could be distracting to a reviewer. Placing this information in a separate root element allows a reviewer to more easily ignore this information if desired.

The root element may contain only a single command element. In this way, each transmitted update document contains only a single command for updating the target document and if the transmission is interrupted then a minimum amount of information will be lost. Of course, the root element may contain a plurality of command elements provided as siblings with one another. Extensive updates can therefore be sent in a single update document, with each command element being processed and acted on in turn.

Preferably the command element includes a path identifier attribute identifying a location in the target document to be modified. For example, the command element may identify a command to add the fragment body after, or before, a particular node in the target document identified by the path identifier attribute.

Other aspects of the present invention provide a computer implemented method of modifying a target mark-up language document stored on a user computer system, a computer implemented method of modifying a target mark-up language document stored on a user computer system, a computer system for modifying a target mark-up language document stored on the computer system, and a computer system for generating a mark-up language document for use in modifying a target mark-up language document stored on a user computer system. Advantageous and preferred features of these aspects of the present invention will be clear from the above discussion of the second main aspect and the accompanying claims.

A third main aspect of the present invention provides an update mark-up language document for use in instructing a computer system to modify a target mark-up language document stored on the computer system, comprising: a command element identifying a command to modify the target document and a namespace qualified path identifier attribute identifying a location in the target document to be modified. Advantageously, this approach to updating a previously transmitted mark-up language document identifies a namespace used in the target document such that target documents using multiple namespaces can be updated.

In preferred embodiments of the invention the command element identifies a command to modify an attribute of a node, or to delete a node in the target document identified by the namespace qualified path identifier attribute.

Other aspects of the present invention provide a computer implemented method of modifying a target mark-up language document stored on a user computer system, a computer implemented method of modifying a target mark-up language document stored on a user computer system, a computer system for modifying a target mark-up language document stored on the computer system, and a computer system for generating a mark-up language document for use in modifying a target mark-up language document stored on a user computer system. Advantageous and preferred features of these aspects of the present invention will be clear from the above discussion of the third main aspect and the accompanying claims.

In a fourth main aspect, the present invention provides an update mark-up language document for use in instructing a computer system to modify a target mark-up language document stored on the computer system, the document comprising: a command element having contents comprising a payload element, the command element identifying a command actionable by the updater computer system to perform, in order, the following steps: (a) assessing whether an element matching the payload element exists in the target document; and (b) if an element matching the payload element does not exist in the target document, adding the payload element to the target document. Advantageously, this aspect provides an additional command for updating mark-up language documents which intelligently determines whether a payload element exists in a target document before adding the payload element to the target document. A creator of the update document therefore does not need to check whether a particular update has already been made to the target document since sending the update a second time will have no adverse consequences.

When determining a match, the name of the payload element and any attributes of the payload element may be used, while ignoring any contents of the payload element. Preferably, this is achieved by appending a location step expression for the payload element to the starting path to form a test path and determining whether a node specified by the test path exists in the target document. The location path expression includes information identifying the name and any attributes of the payload element. Advantageously, this provides a simple way to analyse the target document to assess whether the payload element already exists.

In one preferred embodiment, the payload element includes at least one attribute and a key pseudo-attribute having a value identifying or specifying at least one of the said at least one attributes, and the location step expression includes the name of the payload element and the or each attribute identified by the key pseudo-attribute. Alternatively the value of the key pseudo-attribute may be an empty string, and the location step expression then includes only the name of the payload element. By using the key pseudo-attribute, a creator of an update document can control which attributes of the payload element are included in the location path expression to ensure that the merging of the update document with the target document is carried out as desired.

Preferably, the merging process is carried out for the or each top level payload element contained in the command element in turn. Furthermore, if an element matching the payload element does not exist in the target document, the process preferably returns to step (a) for each child element of the payload element with the child element as the payload element. In this preferred embodiment, the merging process enables a creator of an update document to send a complex payload structure with any number of elements contained within the command element. By recursively assessing each element in the payload, all of the elements which do not exist in the target document are added to the target document.

In another preferred embodiment, the payload element includes at least one attribute and a sort pseudo-attribute having a value identifying one of the at least one attributes, and wherein the adding in step (b) further comprises sorting the added payload element relative to any sibling elements in the target document in an order determined by the value of the attribute identified by the sort pseudo-attribute. In this way, payload elements added to a target document can be ordered according to some indexing attribute, rather than simply being added in an order determined by time of arrival.

Other aspects of the present invention provide an update mark-up language document for use in instructing an updater computer system to modify a target mark-up language document, a computer system for modifying a target mark-up language document stored on the computer system, and a computer system for generating a mark-up language document for use in modifying a target mark-up language document stored on a user computer system. Advantageous and preferred features of these aspects of the present invention will be clear from the above discussion of the fourth main aspect and the accompanying claims.

Typically, in all of the aspects of the present invention, the mark-up language documents will be written using a meta mark-up language, such as XML, but other mark-up languages will be suitable for certain applications. Also, aspects of the present invention may provide an electronic signal for carrying the document. For example, documents may be carried by a signal such as a telecommunications signal. Other aspects of the present invention may provide a computer memory storing the document. For example, documents may be stored on a computer readable medium such as a floppy disk, computer hard drive, compact disc, or any other suitable storage medium.

A preferred embodiment of the present invention will now be described by way of an example and with reference to the accompanying figures in which:
Figure 1 illustrates a system for providing a data feed embodying the present invention;
Figure 2 illustrates a master document;
Figure 3 illustrates an update document;
Figure 4 illustrates a munge command element; and
Figure 5 illustrates the steps carried out by a processor when actioning a munge command.

Embodiments of the present invention provide a method and system for sending information to a user where that information is subject to change. For example, the present invention may be used to send a data feed containing current affairs information or statistics on a sports event to interested parties. The information is typically stored by a user as a master XML document. In the event that the information changes, an update XML document containing instructions for updating or modifying the master document is sent to the user. For example, the master document may include information relating to a horse race. Prior to the race, the odds of different horses winning will be subject to change and update documents containing new odds for the different horses will be sent to interested parties at regular intervals in order to keep the master document up to date.

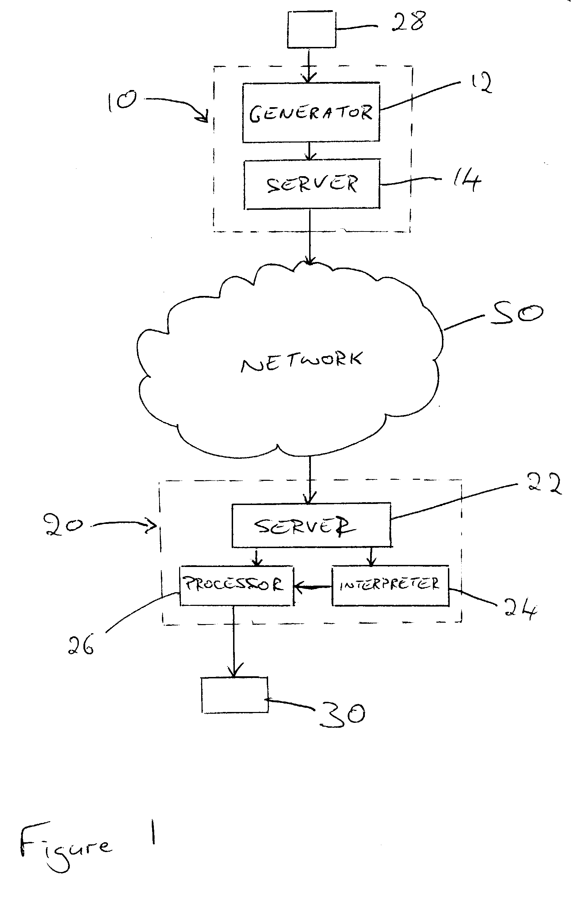

Figure 1 illustrates the important components in a system embodying the present invention. A provider system 10 in communication with a network 50 comprises an XML generator 12 and a provider communications server 14. One or more user systems 20, also in communication with the network 50, comprise a user communications server 22, an XML updater or interpreter 24 and an XML processor 26. The network 50 may be the Internet, a wireless network, such as a satellite communications network, a wireline network, or any combination of networks.

In operation, the provider system 10 receives or gathers information 28 which is provided to the generator 12 in any suitable format. The generator 12 generates a master XML document containing the information. The provider communications server 14 receives the generated master document and sends it over the network 50 to the user system 20. The master document is received by the user system 20 at the user communications server 22 and processed by the processor 26 so that the information can be displayed 30 or otherwise acted upon by the user.

If the information changes, the generator 12 receives updated information 28 and creates an update XML document containing instructions for updating the master document. The update document is transmitted to the user system 20 via the network 50 and the interpreter 24 interprets the instructions contained in the update document to update the master document with the new information. The updated master document is then processed by the processor 26 for display or other purposes 30.

At intervals, the provider communications server 14 sends a master refresh XML document over the network 50 to the user system 20. The master refresh document comprises the original master document as updated by any subsequent update documents.

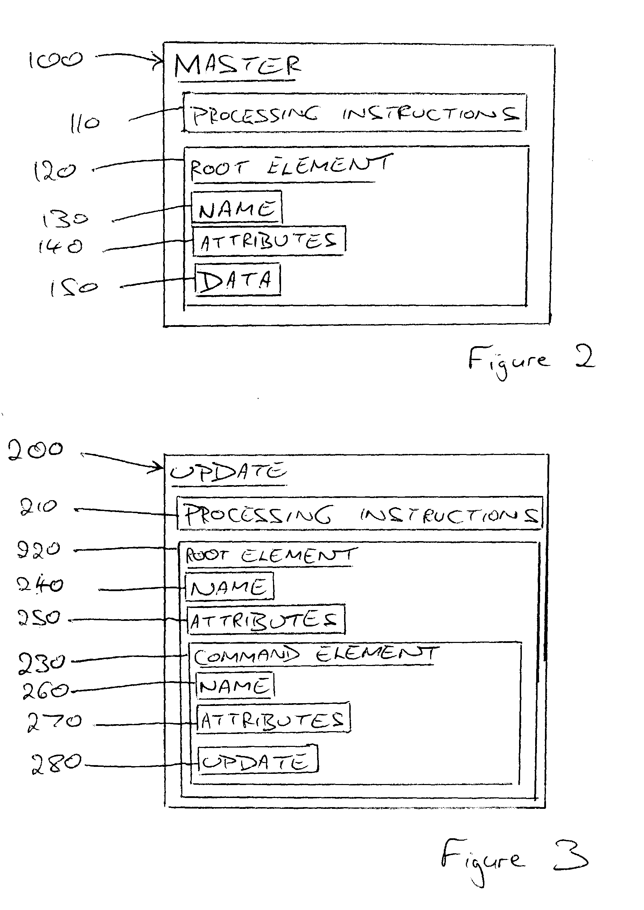

Figure 2 illustrates a master or target document 100, typically an XML document, for use in embodiments of the present invention. The master document 100 may comprise processing instructions 110 and comments having no bearing on the working of the present invention. The master document also comprises a root element 120 containing a data structure 130. The root element 120 is given a name 140 such as "data" to identify it to an interpreter 24 or processor 26 as a document relating to the present invention. The root element 120 typically also includes one or more attributes 150 to provide further identification information. For example, the attributes may include a "type" attribute having a value of "master" to confirm that the document is a master document, may identify a namespace of the master document and a default namespace, and may contain an "id" attribute having a value which differentiates the master document from other master documents. Other identification attributes may be included if required.

The data structure 130, typically an XML data structure, comprises the information which is to be updated. For simplicity, the data structure 130 is independent of the present invention and can therefore be processed by any suitable processor.

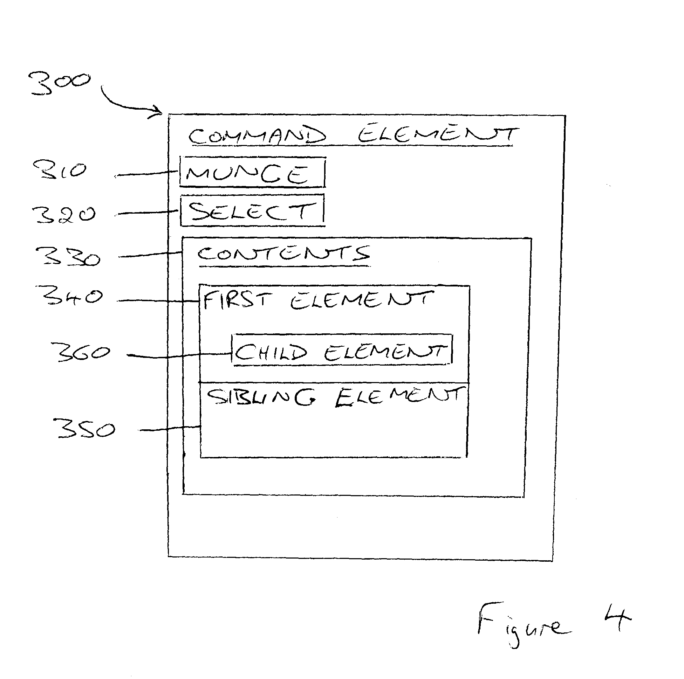

Figure 3 illustrates an update document 200, typically an XML document, embodying the present invention. The update document 200 may comprise processing instructions 210 and comments having no bearing on the working of the present invention. The update document also comprises a root element 220 containing a command element 230. The root element 220 is given a name 240 such as "data" to identify it to an interpreter 24 as a document relating to the present invention. The root element 220 typically also includes one or more attributes 250 to provide further identification information. For example, the attributes may include a "type" attribute having a value of "update" to confirm that the document is an update document, may identify a namespace of the update document and a default namespace, and may contain an "id" attribute having a value which to identify the master document which is to be updated. The attributes preferably also identify a command namespace prefix of "xu" used by the update commands described below.

The command element 230 is given a name 260 which identifies a command for updating the master document 100 which is interpreted and actioned by the interpreter 24. The command element 230 also includes one or more attributes 270. For simplicity, however, only a single attribute named "select" is provided. The value of the select attribute identifies a node in the master document 100. Typically the node is identified by a namespace qualified XPath expression. The identified node is used as the basis for the update or modification. If the value of the select attribute identifies more than one node, each identified node is used as the basis for the update. The command element 230 may also contain update data 280.

In order to update a master document, embodiments of the present invention provide a library of commands which are interpreted by an interpreter to modify the master document in a specified manner. A preferred embodiment of the present invention includes the following commands.

### 1. Ins-pre

This is a command to insert the contents 280 of the command element 230 into the master document 100 before a node or nodes identified by the select attribute 270. For this command, the contents 280 of the command element consist of only a mark-up language data structure, typically an XML data structure.

### 2. Ins-post

This is a command to insert the contents 280 of the command element 230 into the master document 100 after a node or nodes identified by the select attribute 270. For this command, the contents 280 of the command element consist of only a mark-up language data structure, typically an XML data structure.

### 3. Append

This is a command to insert the contents 280 of the command element 230 into the master document 100 after the final child of the node identified by the select attribute 270. For this command, the contents 280 of the command element 230 consist of only a mark-up language data structure, typically an XML data structure.

### 4. Update

This is a command to replace the contents of the node or nodes in the master document 100 identified by the select attribute 270 with the contents 280 of the command element 230. For this command, the contents 280 may comprise either a mark-up language data structure, typically an XML data structure, or a string.

### 5. Ups-at

This is a command to replace an attribute of the node or nodes in the master document 100 identified by the select attribute 270, or to insert a new attribute if the attribute does not already exist at the specified node. For this command, the contents 280 of the command element 230 comprise a sub-command element named "at". The sub-command element has an attribute naming the attribute to be added or inserted. The contents of the sub-command element comprises a string specifying the value of the attribute to be added or inserted.

### 6. Del

This is a command to delete the nodes or nodes in the master document 100 identified by the select attribute 270. For this command, the command element 230 is empty.

### 7. Munge

This is a command to merge the contents 280 of the command element 230 with the master document 100. For this command, the contents 280 of the command element consist of only a mark-up language data structure, typically an XML data structure.

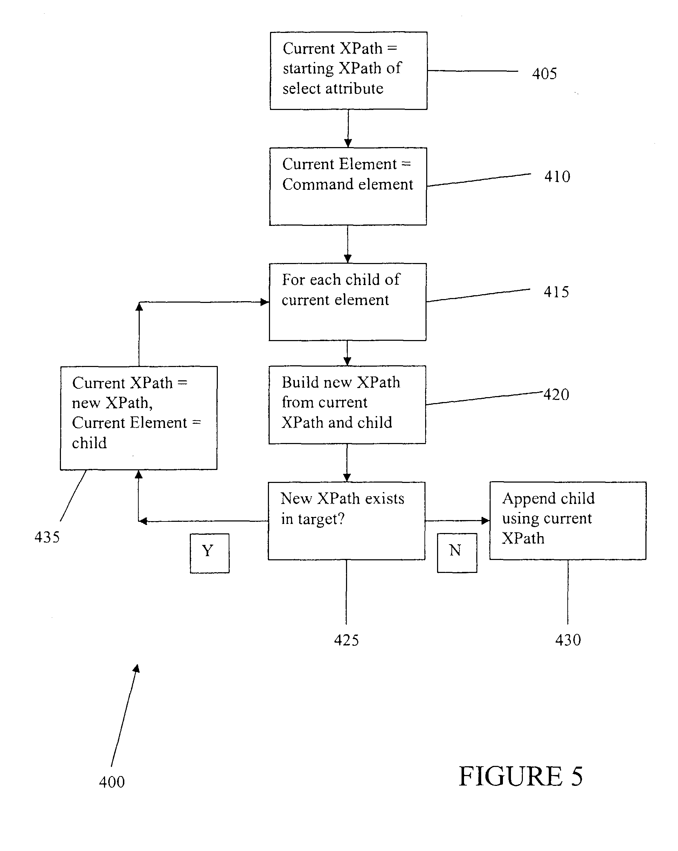

The munge command will now be described in more detail with reference to Figures 4 and 5. Figure 4 illustrates a munge command element 300. The command element 300 is named "munge" 310 and has a "select" attribute 320, the value of which is a path expression for identifying a node or nodes in the master document 100. The contents 330 of the munge command element 300 comprise a data structure 330. In the illustrated example, the data structure comprises a first element 330 having a sibling element 340. The first element 330 further contains a child element 360. However, in practice the contents 330 of the munge command element 300 may comprise any number of sibling elements, each having any number of child elements. It will also be understood that the first element 330 and sibling element 340 are themselves children of the munge command element 300.

The munge process or algorithm 400 is illustrated in Figure 5. This process is carried out by an interpreter 24 when actioning a munge command. Briefly, the munge algorithm performs a munge procedure for each top level element of the munge command element. The munge procedure constructs a path expression, tests this path expression against the master document 100 and either updates the master document 100 by adding a previously non-existent element or else runs the same munge procedure for each child element of the previously tested element.

With specific reference to figure 5, the munge process starts at step 405 where the value of the select attribute 320 is read and stored as a starting or current path expression. In step 410, the munge command element is established as a starting or current element. Then, in step 415, the following "munge" procedure is carried out for each child of the current element.

In step 420, a location step expression for the child element under consideration is established using the name of the child element and any attributes of the element. The location step will typically be of the form:
"/ElementName[@AttributeName = AttributeValue]" with additional attribute names being added if present. Namespace prefixes are also included, if required. The location step expression is appended to the current path expression, thereby creating a new path expression.

The new path expression is tested in step 425 against the master document 100 to determine if a node identified by the new path expression exists. If no match is found, then the child element under consideration (including any contents) is appended as a new child of the node identified by the current path expression (step 430). The process then returns to step 415 to check the next child of the current element.

Alternatively, if the node identified by the new path expression does exist in the master document 100, the interpreter 24 moves to step 435 where the child element under consideration is established as the current element and the new path expression (which has just been tested) is established as the current path expression. The munge procedure starting at step 415 is then repeated for the newly established current element. This loop may be repeated recursively for each child element until no match is found for the child element under consideration.

The munge process 400 ends once the or each top level element contained in the munge command element has been tested, or "munged".

Using the recursive munge process, all of the elements contained in the munge command element 300 are added to the master document 100 only if they did not previously exist in the master document 100.

By default, the name of the child element under consideration and any attributes of the child element are appended to the current path expression in step 420 to form the new path expression to be tested. However, elements contained in the munge command element 300 may be provided with an additional pseudo-attribute named "__key", the value of which determines how attributes are used when forming the new path expression. The value of the key attribute may be an empty string (i.e. __key=""), in which case none of the attributes of the child element are used when creating a new path expression. Alternatively, the value of the key attribute may be equal to the name of one or more other attributes in the element, with multiple attribute names being separated by commas (e.g. __key="type" or __key="type, id"). In this case, the listed attribute or attributes are used when creating a new path expression.

Also by default, any element added to the master document using the munge command is simply appended as if the Append command described above had been used (i.e. it is added as the last child of the identified node). However, the elements contained in the munge command element 300 may be provided with a further additional pseudo-attribute named "__sort". The value of the sort attribute is equal to one of the other attributes of the element under consideration. The value of the attribute identified by the sort attribute is then used to determine where an element being added to the master document 100 should be positioned by arranging elements in increasing value of the identified attribute.

Any key or sort pseudo-attributes contained in an element are removed if that element is added to the master document 100.

Typically, as indicated in Figure 5, the path expressions are XPath expressions and the mark-up language is XML. However, path expressions in any suitable mark-up language may be used.

The update commands described above in general terms will now be described with reference to a specific example. For this example, a suitable user might be a betting shop owner who wishes to obtain up-to-date information relating to a horserace so that he can provide this information to his customers. It will nevertheless be recognised that this does not limit the present invention and the commands described hereafter may be used under many different circumstances. A suitable master XML document containing information relating to the horserace might be as follows:
<data xmlns="urn:hrdg" xmlns:hrdg="urn:hrdg" type="master"
id="horserace" mnem="ES" name ="event" version="1.0.0" category="HR">
<meeting name="BLOEMFONTEIN" code="0266" country="SA"
date="2003-06-02" going="GD/FM, GD IP">
<event name="1M MAIDEN STAKES" id="805491" num="1"
time="01:00:00" progressCode="O" pmsg="OFF"
offTime="01:00:47" going="HEAVY" distance="1m">
<selection name="BOMBSHELL" id="77119" num="2" status="G" jockey="Clive Allard" />
<selection name="BRAASHEE'S JOY" id="77121" num="3" status="G" jockey="Dan Parks" />
<selection name="CUREPIPE" id="77123" num="4" status="G" jockey="Liam Cattlin" />
<selection name="HARD TO BLUFF" id="77125" num="5" status="G" jockey="Alan Bloor" />
<selection name="STELLA MORN" id="77127" num="6" status="G" jockey="Mat Spicey" />
<selection name="SUZUKIKUKI" id="77129" num="7" status="G" jockey="Patrick Devlin" />
<selection name="ARBAT'S WEDDING" id="77131" num="8" status="G" jockey="Lester Piggot" />
<result id="1573609"></result>
<comment>start delayed</comment>
</event>
</meeting>
</data>

As shown, the "data" element identifies namespaces used in the master document, and a default namespace. The above example comprises only a single namespace: urn:hrdg. The data element also includes a "type" attribute identifying the document as a master document. An "id" attribute with a value of "horserace" and a number of other identifying attributes are also included.

The "meeting" element (including its contents) is simply an XML block containing information on the horserace and has no bearing on the present invention. This ensures that the part of the document which actually contains the information required by a user is as simple as possible.

A number of example update documents will now be described together with the consequence of an interpreter 24 acting on the contents of the update documents to update the master document. In all of the examples below, the "data" element includes an attribute named "id" having a value of "horserace" to identify the master document. The data element further includes a namespace identifier "xmlns:xu" having a value of "urn:update". The xu namespace prefix is used for each of the update commands.

### 1. Insert Before

<data type = "update" xmlns:xu="urn:update"
xmlns:hrdg="urn:hrdg" xmlns="urn:hrdg" id= "horserace" >
<xu:ins-pre
select="/hrdg:data/hrdg:meeting[@code="0266"]/hrdg:event[@id ="805491"]/hrdg:selection[@id="77119"]" >
<selection name="ASHTON TIME" id="77117" num="1"
status="G" jockey="Callum Lumsden" />
</xu:ins-pre>
</data>
Actioning the update document above results in a new element named "selection" including details of the horse "ASHTON TIME" being added to the master document. The new element is inserted before the selection element in the master document having an id attribute equal to "77119" - this being the selection element for the horse "BOMBSHELL".

### 2. Insert After

<data type = "update" xmlns:xu="urn:update"
xmlns:hrdg="urn:hrdg" xmlns="urn:hrdg" id= "horserace" >
<xu:ins-post
select="/hrdg:data/hrdg:meeting[@code="0266"]/hrdg:event[@id ="805491"]/hrdg:selection[@id="77131"]" >
<selection name="TURN A CENT" id="77133" num="9"
status="G" jockey="Pat Eddery" />
</xu:ins-post>
</data>
Actioning the update document above results in a new element named "selection" including details of the horse "TURN A CENT" being added to the master document. The new element is inserted after the selection element in the master document having an id attribute equal to "77131" - this being the selection element for the horse "ARBAT'S WEDDING".

### 3. Append

<data type = "update" xmlns:xu="urn:update"
xmlns:hrdg="urn:hrdg" xmlns="urn:hrdg" id= "horserace" >
<xu:append
select="/hrdg:data/hrdg:meeting[@code="0266"]/hrdg:event[@id ="805491"]" >
<selection name="TURN A CENT" id="77133" num="9"
status="G" jockey="Pat Eddery" />
</xu:append>
</data>
Actioning the update document above results in a new element named "selection" including details of the horse "TURN A CENT" being added to the master document. The new element is appended to the end of the contents of the event element having an id attribute of "805491" (this being the only event element in the present example). Since the selection element for the horse "ARBAT'S WEDDING" is the final element contained in the event element, this update document has the same effect as the update document described above under "Insert After".

### 4. Update Text Content

<data type = "update" xmlns:xu="urn:update"
xmlns:hrdg="urn:hrdg" xmlns="urn:hrdg" id= "horserace" >
<xu:update
select="/hrdg:data/hrdg:meeting[@code="0266"]/hrdg:event[@id ="805491"]/hrdg:comment" >Off at 01:15</xu:update>
</data>
Actioning the update document above results in the contents of the comment element in the master document being updated so that it contains the text "Off at 01:15". The previous text content of "start delayed" is replaced.

### 5. Insert Attribute

<data type = "update" xmlns:xu="urn:update"
xmlns:hrdg="urn:hrdg" xmlns="urn:hrdg" id= "horserace" >
<xu:ups-at
select="/hrdg:data/hrdg:meeting[@code="0266"]/hrdg:event[@id ="805491"]/hrdg:selection[@id="77125"]" >
<xu:at name="reservename">Dead Ringer</xu:at>
</xu:ups-at>
</data>
Actioning the update document above results in an attribute named "reservename" having a value of "Dead Ringer" being added to the selection element with an id attribute of "77125" - this being the selection element for the horse "HARD TO BLUFF".

### 6. Update Attribute

<data type = "update" xmlns:xu="urn:update"
xmlns:hrdg="urn:hrdg" xmlns="urn:hrdg" id= "horserace" >
<xu:ups-at
select="/hrdg:data/hrdg:meeting[@code="0266"]/hrdg:event[@id
="805491"]/hrdg:selection[@id="77127"]" >
<xu:at name="status">N</xu:at>
</xu:ups-at>
</data>
Actioning the update document above results in the status attribute for selection element having an id attribute of "77127" (horse STELLA MORN) being changed to "N".

### 7. Delete Element

<data type = "update" xmlns:xu="urn:update"
xmlns:hrdg="urn:hrdg" xmlns="urn:hrdg" id= "horserace" >
<xu:del
select="/hrdg:data/hrdg:meeting[@code="0266"]/hrdg:event[@id ="805491"]/hrdg:selection[@id="77127"]" />
</data>
Actioning the update document above results in removal of the selection element having an id attribute of "77127" - this being the selection element for the horse "STELLA MORN".

### 8. Delete Attribute

<data type = "update" xmlns:xu="urn:update"
xmlns:hrdg="urn:hrdg" xmlns="urn:hrdg" id= "horserace" >
<xu:del
select="/hrdg:data/hrdg:meeting[@code="0266"]/hrdg:event[@id ="805491"]/@pmsg" />
</data>
Actioning the update document above results in removal of the "pmsg" attribute in the event element.

### 9. Delete Text Content of an Element

<data type = "update" xmlns:xu="urn:update"
xmlns:hrdg="urn:hrdg" xmlns="urn:hrdg" id= "horserace" >
<xu:del
select="/hrdg:data/hrdg:meeting[@code="0266"]/hrdg:event[@id ="805491"]/hrdg:comment/text()" />
</data>
Actioning the update document above results in removal of the text contained in the comment element.

### 10. Munge

<data type = "update" xmlns:xu="urn:update"
xmlns:hrdg="urn:hrdg" xmlns="urn:hrdg" id= "horserace" >
<xu:munge select="/hrdg:data/hrdg:meeting[@code="0266"]" >
<event id = "8054912" __key="id" >
<result id = "1573609" __key="id" >
<position fav="2f" id="1782133" name="BRAASHEE'S JOY"
position="1" runnernumber="3" sp="14/5" />
<position fav="Fav" id="1782135" name="HARD TO BLUFF"
position="2" reservename="Dead Ringer" runnernumber="5"
sp="7/1" />
<position id="1782137" name="SUZUKIKUKI" position="3"
runnernumber="7" sp="5/2" />
</result>
</event>
</xu:munge>
</data>
Actioning the update document above results in the merging of the contents of the munge element with the master document. In this example, an attempt is first made to locate an event element in the master document having an id attribute of "8054912". This is achieved by adding the location step expression of the event element in the update document (/hrdg:event[@id=8054912]) to the starting path identified in the munge element to construct a test path of: /hrdg:data/hrdg:meeting[@code=0266]/hrdg:event[@id=8054912]. The event element in the example update document above has only a single attribute named "id", but if other attributes were present these would nevertheless be ignored when creating the location step expression due to the __key="id" pseudo-attribute. The test path is then tested against the target document to see if a node identified by the test path exists. This test succeeds, so an attempt is then made to locate a result element in the target document having an id attribute of "1573609" by appending the location step expression /hrdg:results[@id=1573609] to the previous test path. This test also succeeds. However, the result element does not contain any position elements, so there are no matches to the position elements having id attributes of "1782133", "1782135" or "1782137". These three position elements are therefore appended to the (previously empty) contents of the result element in the master document.

## Claims

1. A computer implemented method of providing a data feed to a user computer system, the user computer system having a master mark-up language document thereon containing a record of information that is subject to change, the method comprising:
sending an update mark-up language document to the user computer system, the update document containing instructions actionable by the user computer system to modify the record contained in the master document.

2. A method as claimed in claim 1 further comprising sending the master document to the user computer system.

3. A method as claimed in claim 1 or claim 2 wherein update documents are sent to the user computer system when the information changes.

4. A method as claimed in claim 1 or claim 2 wherein update documents are sent to the user computer system with sufficient frequency to keep the record contained in the master document substantially up to date.

5. A method as claimed in claim 3 or claim 4 further comprising sending, at intervals, a refresh mark-up language document containing the master document as updated by the or each preceding update document.

6. A computer implemented method of receiving a data feed at a user computer system, the user computer system having a master mark-up language document thereon containing a record of information that is subject to change, the method comprising:
receiving an update mark-up language document at the user computer system, the update document containing instructions to modify the record contained in the master document; and
interpreting the instructions with the user computer system and actioning the instructions to modify the record contained in the master document.

7. A method as claimed in claim 6 further comprising receiving the master document at the user computer system.

8. A method as claimed in either of claims claim 6 or 7 wherein update documents are received at the user computer system when the information changes.

9. A method as claimed in either of claims claim 6 or 7 wherein update documents are received at the user computer system with sufficient frequency to keep the record contained in the master document substantially up to date.

10. A method as claimed in claim 8 or claim 9 further comprising receiving, at intervals, a refresh mark-up language document containing the master document as updated by the or each preceding update document.

11. A method as claimed in claim 5 or claim 10 wherein said intervals are substantially equal intervals of time.

12. A method as claimed in claim 5 or claim 10 wherein said intervals are intervals of a predetermined number of update documents.

13. A method as claimed in any preceding claim wherein the update document further comprises a mark-up language fragment body and the instructions are one of instructions to add the fragment body to the master document or instructions to merge the fragment body with the master document.

14. A method as claimed in any of claims 1 to 12 wherein the instructions are to delete an element of the master document.

15. An updater computer system for providing a data feed to a user computer system, the user computer system having a master mark-up language document thereon containing a record of information that is subject to change, the updater computer system comprising:
a generator for generating an update mark-up language document containing instructions actionable by the user computer system to modify the record contained in the master document; and
a communications server for sending the update document to the user computer system.

16. A computer system as claimed in claim 15 wherein the generator is adapted to generate the master document and the communications server is adapted to send the master document to the user computer system.

17. A computer system as claimed in claim 15 or claim 16 wherein the communications server sends update documents to the user computer system when the information changes.

18. A computer system as claimed in claim 15 or claim 16 wherein the communications server sends update documents to the user computer system with sufficient frequency to keep the record contained in the master document substantially up-to-date.

19. A computer system as claimed in claim 17 or claim 18 wherein the communications server is adapted to send, at intervals, a refresh mark-up language document containing the master document as updated by the or each preceding update document.

20. A computer system as claimed in claim 19 wherein the generator is adapted to generate the refresh document.

21. A user computer system for receiving a data feed from an updater computer system, the user computer system comprising:
a memory for storing a master mark-up language document containing a record of information that is subject to change;
a communications server for receiving an update mark-up language document from an updater computer system; and
an updater for interpreting the update document and for actioning instructions contained in the update document to modify the record contained in the master document.

22. A computer system as claimed in claim 21 wherein the communications server is adapted to receive the master document from the updater computer system.

23. A computer system as claimed in either of claim 21 or claim 22 wherein the communications server is adapted to receive, at intervals, a refresh mark-up language document containing the master document as updated by the or each preceding update document from the updater computer system, and to replace the master document with the refresh document.

24. A computer system as claimed in any of claims 19, 20 or 23 wherein said intervals are substantially equal intervals of time.

25. A computer system as claimed in any of claims 19, 20 or 23 wherein said intervals are intervals of a predetermined number of update documents.

26. A computer system as claimed in any of claims 15 to 25 wherein the update document further comprises a mark-up language fragment body and the instructions are one of instructions to add the fragment body to the master document or instructions to merge the fragment body with the master document.

27. A computer system as claimed in any of claims 15 to 25 wherein the instructions are to delete an element of the master document.

28. An update mark-up language document for use in instructing an updater computer system to modify a target mark-up language document, comprising:
a command element having contents consisting only of a mark-up language fragment body, the command element identifying a command actionable by an updater computer system to add the fragment body to the target document.

29. A document as claimed in claim 28 wherein the name of the command element identifies the command to add the fragment body to the target document.

30. A document as claimed in claim 28 or claim 29 further comprising a root element containing the command element.

31. A document as claimed in claim 30 wherein the root element includes at least one of a target identifier attribute identifying the target document and a namespace identifier attribute identifying a namespace of the target document.

32. A document as claimed in either of claim 30 or claim 31 wherein the root element contains either one of a single command element, or a plurality of command elements provided as siblings with one another.

33. A document as claimed in any of claims 28 to 32 wherein the command element includes a path identifier attribute identifying a location in the target document for the modification.

34. A document as claimed in claim 33 wherein the path identifier is namespace qualified.

35. A document as claimed in either of claims 33 or 34 wherein the command element identifies either one of a command to add the fragment body after a node in the target document identified by the path identifier attribute, or a command to add the fragment body before a node in the target document identified by the path identifier attribute.

36. A computer implemented method of modifying a target mark-up language document stored on a user computer system, the method comprising:
receiving at the user computer system an update mark-up language document comprising a command element having contents consisting only of a mark-up language fragment body; and
adding the fragment body to the target document in accordance with a command identified by the command element.

37. A computer implemented method of modifying a target mark-up language document stored on a user computer system, the method comprising:
generating an update mark-up language document comprising a command element having contents consisting only of a mark-up language fragment body, the command element identifying a command actionable by the user computer system to add the fragment body to the target document; and
sending the update document to the user computer system.

38. A computer system for modifying a target mark-up language document stored on the computer system, the system comprising:
means for receiving an update mark-up language document, the update document comprising a command element having contents consisting only of a mark-up language fragment body; and
means for adding the fragment body to the target document in accordance with a command identified by the command element.

39. A computer system for generating a mark-up language document for use in modifying a target mark-up language document stored on a user computer system, the system comprising:
means for generating an update mark-up language document, the update document comprising a command element having contents consisting only of a mark-up language fragment body, the command element identifying a command actionable by a user computer system to add the fragment body to a target mark-up language document stored on the user computer system; and
means for sending the update document to a user computer system.

40. An update mark-up language document for use in instructing an updater computer system to modify a target mark-up language document, comprising:
a command element identifying a command to modify the target document; and
a namespace qualified path identifier identifying a location in the target document for the modification.

41. A document as claimed in claim 40 wherein the name of the command element identifies the command to modify the target document.

42. A document as claimed in claim 40 or claim 41 wherein the path identifier is the value of an attribute of the command element.

43. A document as claimed in any of claims 40 to 42 wherein the command element has contents and the command element identifies a command to add the contents of the command element to the target document.

44. A document as claimed in any of claims 40 to 42 wherein the command element has contents consisting only of a mark-up language fragment body and the command element identifies a command to add the fragment body to the target document.

45. A document as claimed in claim 44 wherein the command element identifies a command to add the fragment body after a node in the target document identified by the path identifier.

46. A document as claimed in claim 44 wherein the command element identifies a command to add the fragment body before a node in the target document identified by the path identifier.

47. A document as claimed in any of claims 40 to 42 wherein the command element identifies a command to modify an attribute of a node in the target document identified by the path identifier.

48. A document as claimed in any of claims 40 to 42 wherein the command element identifies a command to delete a node in the target document identified by the path identifier.

49. A computer implemented method of modifying a target mark-up language document stored on a user computer system, the method comprising:
receiving at the user computer system an update mark-up language document comprising a command element identifying a command to modify the target document and a namespace qualified path identifier identifying a location in the target document for the modification; and
modifying the target document in accordance with the command identified by the command element.

50. A computer implemented method of modifying a target mark-up language document stored on a user computer system, the method comprising:
generating an update mark-up language document comprising a command element identifying a command actionable by a user computer system to modify the target document and a namespace qualified path identifier identifying a location in the target document for the modification; and
sending the fragment body to the user computer system.

51. A computer system for modifying a target mark-up language document stored on the computer system, the system comprising:
means for receiving an update mark-up language document comprising a command element identifying a command to modify the target document and a namespace qualified path identifier identifying a location in the target document for the modification; and
means modifying the target document in accordance with the command identified by the command element.

52. A computer system for generating a mark-up language document for use in modifying a target mark-up language document stored on a user computer system, the system comprising:
means for generating an update mark-up language document comprising a command element identifying a command actionable by a user computer system to modify the target document and a namespace qualified path identifier identifying a location in the target document for the modification; and
means for sending the fragment body to a user computer system.

53. A computer implemented method of modifying a target mark-up language document stored on a user computer system, the method comprising:
receiving an update mark-up language document comprising a command element having contents comprising a payload element, the command element identifying a command actionable by a user computer system to perform the following steps:
(a) assessing whether an element matching the payload element exists in the target document; and
(b) if an element matching the payload element does not exist in the target document, adding the payload element to the target document.

54. A computer implemented method of modifying a target mark-up language document stored on a user computer system, the method comprising:
generating an update mark-language document comprising a command element having contents comprising a payload element, the command element identifying a command actionable by a user computer system to perform the following steps:
(a) assessing whether an element matching the payload element exists in the target document; and
(b) if an element matching the payload element does not exist in the target document, adding the payload element to the target document; and
sending the update document to the user computer system.

55. A method as claimed in either of claim 53 or claim 54 wherein step (a) further comprises using the name of the payload element when determining a match.

56. A method as claimed in any of claims 53 to 55 wherein step (a) further comprises using any attributes of the payload element when determining a match.

57. A method as claimed in any of claims 53 to 56 wherein step (a) further comprises ignoring any contents of the payload element when determining a match.

58. A method as claimed in either of claim 53 or claim 54 wherein the command element includes an attribute identifying a starting path and wherein the assessment in step (a) is carried out by appending a location step expression for the payload element to the starting path to form a test path and determining whether a node specified by the test path exists in the target document.

59. A method as claimed in claim 58 wherein the adding in step (b) comprises adding the payload element to a location identified by the test path.

60. A method as claimed in claim 58 or claim 59 wherein the payload element includes at least one attribute and a key pseudo-attribute having a value identifying at least one of the said at least one attributes, and wherein the location step expression includes the name of the payload element and the or each attribute identified by the key pseudo-attribute.

61. A method as claimed in any of claims 53 to 60 wherein step (b) further comprises:
returning to step (a) for each sibling element of the payload element with the sibling element as the payload element.

62. A method as claimed in any of claims 53 to 60 wherein the assessment in step (a) is carried out for the or each top level payload element of the contents of the command element.

63. A method as claimed in any of claims 53 to 62 wherein the steps actionable by the user computer system further comprise:
(c) if an element matching the payload element does not exist in the target document, returning to step (a) for each child element of the payload element with the child element as the payload element.

64. A method as claimed in claim 63 when dependent on any of claims 58 to 60 wherein, on returning to step (a), the test path is used as the starting path.

65. A method as claimed in any of claims 53 to 64 wherein the payload element includes at least one attribute and a sort pseudo-attribute having a value identifying one of the at least one attributes, and wherein the adding in step (b) further comprises sorting the added payload element relative to any sibling elements in the target document in an order determined by the value of the attribute identified by the sort pseudo-attribute.

66. An update mark-up language document for use in instructing an updater computer system to modify a target mark-up language document, the document comprising:
a command element having contents comprising a payload element, the command element identifying a command actionable by the updater computer system to perform the following steps:
(a) assessing whether an element matching the payload element exists in the target document; and
(b) if an element matching the payload element does not exist in the target document, adding the payload element to the target document.

67. A computer system for modifying a target mark-up language document stored on the computer system, the system comprising:
means for receiving an update mark-up language document comprising a command element having contents comprising a payload element; and
means for actioning a command identified by the command element to perform the following steps:
(a) assessing whether an element matching the payload element exists in the target document; and
(b) if an element matching the payload element does not exist in the target document, adding the payload element to the target document.

68. A computer system for generating a mark-up language document for use in modifying a target mark-up language document stored on a user computer system, the system comprising:
means for generating an update mark-up language document comprising a command element having contents comprising a payload element, the command element identifying a command actionable by a user computer system to perform the following steps:
(a) assessing whether an element matching the payload element exists in the target document; and
(b) if an element matching the payload element does not exist in the target document, adding the payload element to the target document; and
means for sending the update document to a user computer system.

69. A document as claimed in any of claims 28 to 35, 40 to 48, or 66 wherein the mark-up language is a meta language.

70. A document as claimed in claim 69 wherein the meta language is XML.

71. An electronic signal carrying the document of any of claims 28 to 35, 40 to 48, 66, 69 or 70.

72. A signal as claimed in claim 71 wherein the signal is a telecommunications signal.

73. A computer memory storing the document of any of claims 28 to 35, 40 to 48, 66, 69 or 70.
